Europäisches Patentamt

European Patent Office

Office européen des brevets

(11) Veröffentlichungsnummer: **0 508 080 A2**

# EUROPÄISCHE PATENTANMELDUNG

(21) Anmeldenummer: **92103273.6**

(22) Anmeldetag: **26.02.92**

(51) Int. Cl.5: **B29C 47/50**, B29C 47/76

(30) Priorität: **07.04.91 DE 4111217**

(43) Veröffentlichungstag der Anmeldung:
**14.10.92 Patentblatt 92/42**

(84) Benannte Vertragsstaaten:
**CH DE ES FR GB IT LI**

(71) Anmelder: **PAUL TROESTER MASCHINENFABRIK**
**Am Brabrinke 2-4**
**W-3000 Hannover 81(DE)**

(72) Erfinder: **Baumgarten, Wilfried, Dipl.-Ing.**
**Stettiner Strasse 17**
**W-3017 Pattensen(DE)**
Erfinder: **Klein, Heinz**
**Berliner Strasse 11**
**W-3017 Pattensen(DE)**
Erfinder: **Ramm, Hans Friedbert, Dipl.-Ing. Dr.**
**Arnumer Kirchstrasse 5B**
**W-3005 Hemmingen-Arnum(DE)**

(74) Vertreter: **Junius, Walther, Dr.**
**Wolfstrasse 24**
**W-3000 Hannover-Waldheim(DE)**

(54) Vorrichtung zum Extrudieren von Kautschukmischungen und Kautschuk ähnlichen Massen.

(57) Die Erfindung betrifft eine Vorrichtung zum Extrudieren von Kautschukmischungen und Kautschuk ähnlichen Massen, bestehend aus einem Schnekkenextruder und einem das Extrudat strangförmig ausformenden Spritzkopf. Es ist die Aufgabe der Erfindung, eine Extruder-Zahnradpumpen-Kombination zu schaffen, die zur Verarbeitung von Kautschukmischungen geeignet ist. Die Erfindung besteht darin, daß in der Vorrichtung zum Extrudieren von Kautschukmassen zwischen dem Extruder und dem Spritzkopf eine Zahnradpumpe angeordnet ist, und daß die Schneckenspitze bis in das Gehäuse der Zahnradpumpe oder bis zu einer parallel zu den Achsen der Zahnräder gleichen Durchmessers oder tangential zum Zahnrad größeren Durchmessers verlaufenden Ebene oder über diese hinaus in den Spalt zwischen den beiden Zahnrädern hineinreicht. Für die Verarbeitung extrem empfindlicher Kautschukmischungen ist es zweckmäßig, wenn die Länge der Extruderschnecke lediglich für eine ausreichende Plastifizierung der zu extrudierenden Kautschukmassen bemessen ist und wenn an diesen Einschneckenextruder ein Zweischneckenextruder, dessen Schnecken gegenläufig drehen und mit ihren Schneckengängen ineinander greifen, für den Aufbau des Extrusionsdruckes angeschlossen ist.

Die Erfindung betrifft eine Vorrichtung zum Extrudieren von Kautschukmischungen und Kautschuk ähnlichen Massen, bestehend aus einem Schneckenextruder und einem das Extrudat strangförmig ausformenden Spritzkopf.

Derartige Extrusionsvorrichtungen sind seit dem Beginn des Baues von Maschinen für die Gummiherstellung bekannt und werden heute überall in der Kunststoff- und Gummiindustrie angewandt. Bei der Verarbeitung von Kunststoffen dienen sie zum Aufschmelzen und Homogenisieren des Kunststoffes, welcher dann als flüssiges Produkt weiterverarbeitet wird. In der Gummiindustrie dienen die Extruder im wesentlichen zur Plastifizierung von Kautschukmassen, die im Spritzkopf ausgeformt und nach dem Verlassen des Spritzkopfes weiterverarbeitet, z.B. vulkanisiert werden. In der Gummiindustrie werden Extruder entweder mit kalten Mischungen oder mit bereits durch maschinelle Verarbeitung vorgewärmten Mischungen beschickt. Für bestimmte Produkte und bei bestimmten Mischungen ist es notwendig, diese im Extruder zu entgasen, wozu Vakuumextruder dienen, welche hinter einer Misch- und Plastifizierzone eine Entgasungszone aufweisen, in welcher Unterdruck herrscht, an die sich dann eine Druckaufbauzone anschließt.

Gemeinsames Kennzeichen dieser Extruder ist generell, daß sie als Reibungsmaschinen eine mit steigendem Massedruck abfallende Förderkennlinie besitzen. Dabei ist dieser Leistungsabfall umso größer, je kürzer die Schnecke bzw. die verfügbare Druckaufbauzone der Schnecke ist. Bei langen Kaltbeschickungsschnecken spielt der Abfall der Kennlinie oft nur eine untergeordnete Rolle. Bei Vakuumextrudern aber entsteht bei gelegentlich durch die Mischungsbeschaffenheit, den Düsenwiderstand, Temperaturprobleme oder dergleichen vorkommenden extremen Massedrucken ein so starker Rückstau in der Druckaufbauzone der Schnecke, daß die Vakuumzone überflutet und die Produktion gestört wird.

Weiter ist es bei hohem Massedruck nachteilig, daß der Schneckenextruder beim Aufbau dieses hohen Druckes eine starke und unerwünschte Wärmeentwicklung in der zu fördernden Masse bringt. Dadurch kann die Ausstoßleistung erheblich gedrosselt werden, weil die Massetemperatur wegen der Gefahr des Einsetzens der Vulkanisation, die dann auch zu Anvulkanisationen im Extruder führen kann, begrenzt werden muß. Dieses Problem spielt insbesondere bei schnell vulkanisierenden Mischungen, (z.B. bei der Ummantelung von Drähten und Kabeln) eine erhebliche Rolle.

Bei der Fertigung von Gummiprofilen für die Kraftfahrzeugindustrie werden in neuerer Zeit extrem hohe Genauigkeitsanforderungen gestellt, die durch normale Vakuumextruder kaum noch erfüllt werden können. Da hier fast ausschließlich mit kontinuierlicher Vulkanisation gearbeitet wird, ist bei zu starken Toleranzschwankungen das vulkanisierte Material als Ausschuß zu betrachten, wodurch ein teurer Verlust entstanden ist, denn ein vulkanisiertes Fehlfabrikat ist nicht wieder verwendbar.

Extrudern eigene Schwankungen der Ausstoßparameter sind z.B. in der DE-OS 30 13 184 in Diagrammen dargestellt. Bei der Verarbeitung von thermoplastischen Kunststoffen ist es seit langem bekannt, diese Schwankungen dadurch zu beseitigen, daß im Weg des Extrudates vom Extruder in den Spritzkopf Fördergeräte mit druckunabhängiger Kennlinie, in erster Linie Zahnradpumpen, eingesetzt werden. So ist es durch die DE-OS 39 17 523 bekannt geworden, eine trägheitslose Massetemperatureinstellung unabhängig vom Durchsatz durch Anwendung eines förderweichen Extruders mit nachgeschalteter förderharter Pumpe zu erzielen. Durch die DDR-PS 93 020 ist es bekannt geworden, Fluktuationen im Ausstoßverhalten eines Extruders durch den Einsatz von Zahnradpumpen stark abzuschwächen oder gänzlich auszuschalten. Durch die DE-PS 38 33 777 ist eine Hochgeschwindigkeitsextrusion mit einer Extruder-Zahnradpumpen-Kombination ermöglicht, weil am Ausgang dieser Kombination Schwankungen so gering sind, daß sich die hohe Extrusionsgeschwindigkeit erzielen läßt. Die DE-OS 17 79 174 benutzt eine Extruder-Zahnradpumpen-Kombination für die Extrusion hochpolymerer Kunststoffe, deren Verarbeitungstemperatur nicht zu niedrig liegen darf, damit nicht eine zu starke Strukturierung beim mechanischen Abbau des Materials erfolgt, die andererseits aber auch nicht zu hoch werden darf, da dann ein chemischer Abbau des Molekulargewichts einsetzt. Die DE 31 33 647 zeigt einen Planetwalzenextruder für die Kunststoffverarbeitung, bei dem die Spitze einer Planetwalze bis in das Gehäuse der Zahnradpumpe hineinragt.

Durch die DE-OS 27 00 003 ist es in einer aus Extruder und Zahnradpumpe bestehenden Anlage zur Herstellung von Strangpreßprofilen bekannt geworden, zwischen dem Extruder und der Zahnradpumpe ein Strainersieb anzuordnen, um das geschmolzene Kunststoffmaterial zu strainern, damit nicht unaufgeschlossene Teile Schäden an der Zahnradpumpe hervorrufen.

Im Gegensatz zur Kunststoffindustrie, wo aufgeschmolzener Kunststoff in niedrigviskoser Form den Extruder verläßt und von der Zahnradpumpe einwandfrei gefördert wird, liegen die Verhältnisse in der Gummiindustrie anders: Dort verläßt den Extruder ein plastifiziertes Material, welches keineswegs aufgeschmolzenen Kunststoffen vergleichbar ist, sondern im allgemeinen hochviskos ist und bei dem die Moleküle einen ganz anderen Zusammenhang untereinander besitzen, ganz abgesehen von den oft stark abrasiven Eigenschaften von Kautschukmischungen. Darüber hinaus ist bei Kautschukmischungen immer die Gefahr der Vulkanisation vor dem Verlassen des Spritzkopfes zu berücksichtigen, insbesondere müssen alle Fließwege bei Kautschukmischungen vom Eingang des Extruders bis zum Mundstück des Spritzkopfes so gestaltet sein, daß nicht an irgend welchen Stellen Mischung länger verweilt als an anderen Stellen, insbesondere nicht an einigen im Fließschatten liegenden Stellen hängenbleibt, weil bei zu langem Aufenthalt in der Extrusionsanlage die Mischung zu vulkanisieren beginnt. Lösen sich dann bereits im Vulkanisationsprozeß befindliche Mischungsteile aus solchen Fließschattenstellen und gelangen sie in den Extrudatfluß, so verläßt den Spritzkopf ein inhomogenes Extrudat, welches zu einem unbrauchbaren Produkt, also zu Ausschuß führt.

Diese beiden Probleme sind der Grund dafür, daß Extruder-Zahnradpumpen-Kombinationen sich nicht in der Gummiindustrie einführen konnten, obwohl sie wegen der Konstanz der Ausstoßparameter (Druck, Temperatur, Fließgeschwindigkeit, Mischungskonstanz u.a.) dringend gebraucht würden, um die in neuerer Zeit gestellten extrem hohen Genauigkeitsanforderungen zu erfüllen.

Die Erfindung vermeidet die Nachteile des Standes der Technik. Es ist die Aufgabe der Erfindung, eine Extrusionsvorrichtung zu schaffen, in der das Extrudat im wesentlichen nur in der Plastifizierzone erwärmt wird und in der Druckaufbauzone fast ohne Erwärmung auf einen gleichbleibenden Druck gebracht wird, und so exakt konstante Ausstoßparameter erreicht werden.

Die Erfindung besteht darin, daß in der Vorrichtung zum Extrudieren von Kautschukmassen zwischen dem Extruder und dem Spritzkopf eine Zahnradpumpe angeordnet ist und daß die Schnekkenspitze bis zu einer parallel zu den Achsen der Zahnräder gleichen Durchmessers oder tangential zum Zahnrad größeren Durchmessers verlaufenden Ebene oder über diese hinaus in den Spalt zwischen den beiden Zahnrädern der Zahnradpumpe hineinreicht.

Durch diese Anordnung der Schneckenspitze äußerst dicht an den Zahnrädern der Pumpe, wird die im Extruder plastifizierte Kautschukmischung in einem Zustand in die Zahnradpumpe eingeführt, in welchem die im Extruder einer ständigen gegenseitigen Bewegung unterworfenen Masseteile sich noch nicht wie beim Durchlaufen einer geradlinigen Förderstrecke formieren konnten, sondern noch in der vom Knetvorgang im Extruder hervorgerufenen gegenseitigen Bewegung sind. Hierdurch sind die auf die Zähne von der Masse ausgeübten Kräfte niedriger, die Förderung durch die Zähne der Zahnradpumpe setzt die der Masse im Extruder aufgezwungene Bewegung fort und der von der bewegten Kautschukmasse ausgehende Widerstand ist erheblich geringer als wenn eine Kautschukmasse gefördert werden müßte, die sich auf einer geraden Wegstrecke bereits formieren konnte.

Um diesen unmittelbaren Übergang von der Schnecke in die Zähne der Zahnradpumpe zu erreichen, ist es zweckmäßig, wenn das Gehäuse der Zahnradpumpe eingangsseitig den Zylinder oder die Zylinderbuchse des Extruders umschließt.

Vorteilhaft kann es für diesen Zweck auch sein, wenn die Schnecke des Extruders mit ihrer Spitze und vorzugsweise auch ihrem Endbereich aus dem Schneckenzylinder herausragt.

Trotz dieses engen Zusammenrückens von Schneckenspitze und Zahnrädern besteht die Möglichkeit, einen Strainer zwischen Extruder und Zahnradpumpe anzuordnen, um Fremdkörper aus der Mischung zu entfernen, bevor diese in der Zahnradpumpe Schaden anrichten können. Hierzu ist es zweckmäßig, wenn eine vorzugsweise winklige oder gewölbte Strainersiebanordnung im Spalt zwischen der Schneckenspitze und dem Schlagkreis der Zahnräder angeordnet ist.

Durch die Erfindung ist es ermöglicht, daß die Schnecke keine Druckzone oder nur eine sehr kurze, lediglich einen Teil des Extrusionsdruckes aufbauende Zone aufweist. Das erbringt eine erhebliche Verkürzung der Baulänge des Extruders, aber auch ganz andere Möglichkeiten bei der Rezeptur der Mischungen und bei der Bearbeitung der Kautschukmischungen im Extruder. Denn die kürzere Druckzone im Extruder vermindert den Aufbau hoher Temperaturen.

Von besonderer Wichtigkeit ist es, dort, wo Netzspannungsschwankungen oder andere Unregelmäßigkeiten auftreten können, für einen hochgenauen, vorzugsweise digitalgesteuerten Antrieb der Zahnradpumpe zu sorgen.

Zweckmäßig ist es, eine Druck/Drehzahlregelung für die Schnecke des Extruders, bei der der Druckgeber vorzugsweise auf der Einlaufseite der Zahnradpumpe, insbesondere unmittelbar vor den Zahnrädern angeordnet ist, vorzusehen, um die Genauigkeit der Ausstoßparameter zu erhöhen.

Die Extrusionsergebnisse werden besonders gut, wenn eine Schnecke mit förderweicher Charakteristik im Extruder und eine Zahnradpumpe mit fördersteifer Kennlinie kombiniert sind.

Zweckmäßig für eine exakte Einhaltung der Extrusionsparameter, insbesondere der Temperatur, ist es, wenn die Schnecke hinter der Vakuumzone nur wenige Windungen, die für den Aufbau des Zulaufdruckes ausreichen, aufweist.

Extrem gegen Quetschungen empfindliche Kautschukmischungen lassen sich nicht mit Zahnradpumpen fördern, weil zwischen die Zähne eintretendes Fördergut erheblichen Quetschungen unterworfen wird.

Die Erfindung vermeidet auch diesen Nachteil des Standes der Technik. Es ist die weitere Aufgabe der Erfindung, eine Kombination eines Extruders mit einer Fördervorrichtung mit druckunabhängiger Kennlinie zu schaffen, die zur Verarbeitung von insbesondere gegen Quetschungen empfindlichen Kautschukmischungen geeignet ist.

Die Erfindung löst diese weitere Aufgabe dadurch,daß die Länge der Extruderschnecke lediglich für eine ausreichende Plastifizierung der zu extrudierenden Kautschukmassen bemessen ist, und daß an diesen Einschneckenextruder ein Zweischneckenextruder, dessen Schnecken gegenläufig drehbar sind und mit ihren Schneckengängen ineinandergreifen, für den Aufbau des Extrusionsdruckes angeschlossen ist.

Diese Vorrichtung hat den Vorteil einer Konstanz der Ausstoßparameter. Druck, Temperatur, Fließgeschwindigkeit und Mischungskonstanz bleiben während der Betriebsdauer völlig gleichmäßig. Dadurch werden extrem hohe Genauigkeitsanforderungen erfüllt. Dabei ist die Extrusionstemperatur relativ niedrig. Die extrudierten Massen sind nicht derartigen Quetschungen unterworfen, wie sie bei Zahnradpumpen auf einen Teil der geförderten Masse wirken. Durch die relativ niedrige Temperatur des Extrudates werden Vulkanisationen innerhalb der Extrusionsvorrichtung sicher vermieden.

Zweckmäßig ist es, wenn hinter der Plastifizierzone des Einschneckenextruders eine Entgasungszone angeordnet ist, in der das Extrudat nach seiner Plastifizierung entgast wird, so daß das extrudierte Produkt lunker- und blasenfrei ist.

Vorteilhaft ist es, wenn die Schnecke des Einschneckenextruders nach der Entgasungszone nur wenige Schneckengänge aufweist, die für eine kontinuierliche Förderung des Extrudates aus der Entgasungszone in den Doppelschneckenextruder ausreichen.

Da plastifizierte Kautschukmassen im Gegensatz zu aufgeschmolzenen Kunststoffen noch weitgehend intermolekulare Bindungen behalten, ist es zweckmäßig, wenn die Schnecke des Einschneckenextruders bis unmittelbar vor den Einzugsbereich des Zweischneckenextruders geführt ist, damit derartige intermolekulare Bindungen sich beim Übergang vom Einschneckenextruder in den Zweischneckenextruder nicht verfestigen können und im Zweischneckenextruder wieder aufgebrochen werden müssen.

Um diesen Übergangsweg möglichst kurz zu halten, ist es zweckmäßig, wenn die Achse der Schnecke des Einschneckenextruders senkrecht zu derjenigen Ebene angeordnet ist, die durch die Achsen der Schnecken des Zweischneckenextruders verläuft, und wenn die Verlängerung der Achse der Schnecke des Einschneckenextruders durch den Eingriffsbereich der Schneckengänge des Zweischneckenextruders verläuft.

Das Wesen der Erfindung ist nachstehend anhand von in der Zeichnung schematisch dargestellten Ausführungsbeispielen näher erläutert. Es zeigen:

Fig. 1      eine Extruder-Zahnradpumpen-Kombination, bei der das Gehäuse der Zahnradpumpe die Zylinderbuchse des Zylinders des Extruders umschließt,

Fig. 2      einen Schnitt durch das Gehäuse der Zahnradpumpe, die Zylinderbuchse und den Zylinder des Extruders,

Fig. 3      einen Schnitt durch eine aus Einschneckenextruder und getrenntem Zweischneckenextruder aufgebaute Vorrichtung im Schnitt,

Fig. 4      ebenfalls eine aus Einschneckenextruder und Zweischneckenextruder aufgebaute Vorrichtung im Schnitt, bei der die Verlängerung der Schneckenachse des Einschneckenextruders durch den Eingriffsbereich der Schneckengänge des Zweischneckenextruders verläuft,

Fig. 5      einen Schnitt senkrecht zum Schnitt der Fig. 2.

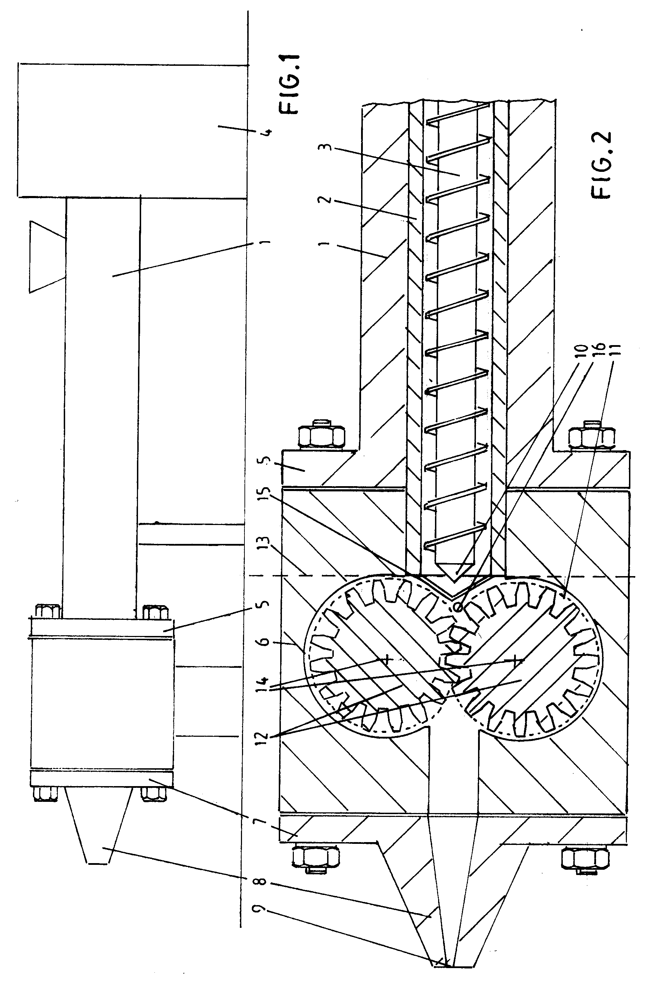

Der Extruder der Fig. 1 und 2 besteht aus einem Zylinder 1, in welchem eine Zylinderbuchse 2 fest eingebaut ist, in der die Extruderschnecke 3 drehbar angeordnet ist, die vom Antriebsaggregat 4 angetrieben wird. An seinem Ende weist der Zylinder 1 einen Flansch 5 auf, an welchem das Gehäuse 6 der Zahnradpumpe angeflanscht ist, an welches mittels des Flansches 7 der Spritzkopf 8 angeflanscht ist, durch dessen Mundstück 9 das Extrudat die Extrusionsvorrichtung verläßt.

Wie aus dem Schnitt in Fig. 2 ersichtlich, ist die Zylinderbuchse 2 tief in das Gehäuse 6 der Zahnradpumpe hineingeführt, um die Schneckenspitze 10 möglichst dicht an den Schlagkreis 11 der Zahnräder 12 heranzuführen, so daß die Schneckenspitze 10 sich bis zu einer Ebene 13 erstreckt, welche parallel zu den Achsen 14 der Zahnräder 12 tangential zum Zahnrad 12 größeren Durchmessers sich erstreckt.

Es können hier Zahnradpumpen zur Anwendung kommen, welche Zahnräder gleichen Durchmessers oder ungleichen Durchmessers aufweisen.

Für das Zurückhalten von Fremdkörpern kann es zweckmäßig sein, ein Strainersieb 15 zwischen den Zahnrädern 12 und der Spitze 10 der Schnecke anzuordnen. Dieses Strainersieb 15 ist zweckmäßigerweise winklig geformt.

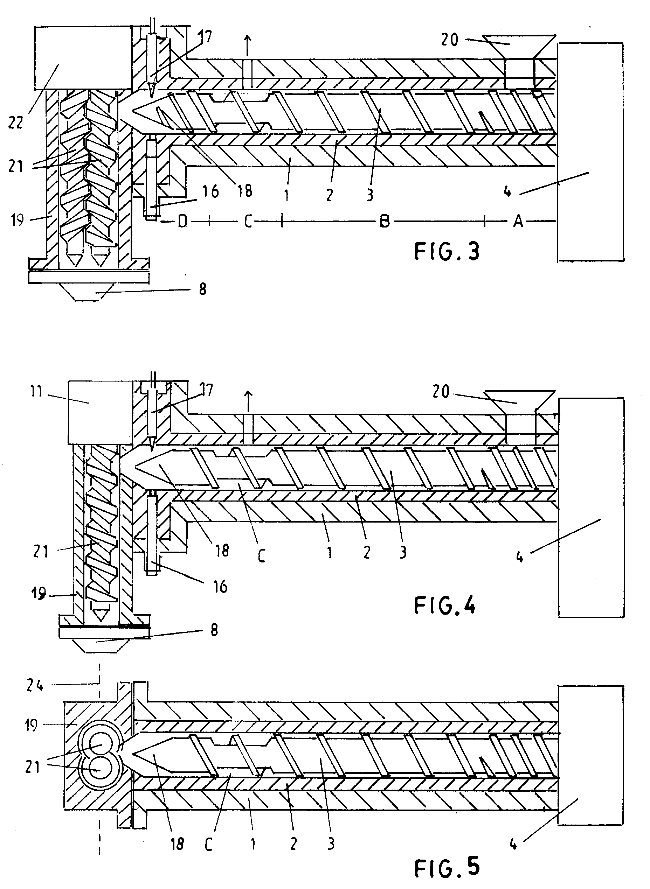

Der Einschneckenextruder der Fig. 3-5 besteht aus einem Zylinder (1) einer in diesen eingesetzte Buchse 2 und der Schnecke 3, welcher die zu verarbeitende Kautschukmischung über den Trichter 20 zugeführt wird und welche ihre Drehbewegung von dem Antrieb 4 erhält. Die Schnecke weist mehrere Bereiche auf, einen Einzugsbereich A, einen Plastifizierbereich B, einen Entgasungsbereich C und einen Förderbereich D. Im Bereich der Schneckenspitze 18 sind zweckmäßigerweise Temperaturgeber 17 und Druckgeber 16 zur Steuerung des Antriebes 4 angeordnet. Diese Schnecke 3 des Einschneckenextruders 1-4 fördert in den Zweischneckenextruder, welcher in dem angeflanschten Gehäuse 19 zwei Schnecken 21 aufweist, welche durch den Antrieb 22 gegensinnig angetrieben werden und deren Schneckenwindungen ineinandergreifen. Dieser Doppelschneckenextruder 21, 22 fördert das Extrudat in den Spritzkopf 23 und baut auf dem Förderweg den notwendigen Extrusionsdruck auf, ohne hierbei die Temperatur in unerwünschter Weise zu erhöhen.

Im Ausführungsbeispiel der Fig. 4 und 5 ist die Achse der Schnecke 3 des Einschneckenextruders 1-4 senkrecht zu derjenigen Ebene 24 angeordnet, welche durch die Achsen der Schnecken 21 des Zweischneckenextruders 21,22 verläuft und die Verlängerung der Achse der Schnecke 3 des Einschneckenextruders verläuft durch den Eingriffsbereich der Schneckengänge der beiden Schnecken 21 des Zweischneckenextruders 21,22. Hierdurch ist erreicht, daß der Weg für das Extrudat vom Einschneckenextruder 1-4 in den Zweischneckenextruder 21, 22 möglichst kurz ist.

Liste der Bezugszeichen:

| | |
|---|---|
| 1 | Zylinder |
| 2 | Zylinderbuchse |
| 3 | Schnecke |
| 4 | Antriebsaggregat |
| 5 | Flansch |
| 6 | Gehäuse |
| 7 | Flansch |
| 8 | Spritzkopf |
| 9 | Mundstück |
| 10 | Schneckenspitze |
| 11 | Schlagkreis |
| 12 | Zahnrad |
| 13 | Ebene |
| 14 | Achse |
| 15 | Strainersieb |
| 16 | Druckgeber |
| 17 | Temperaturgeber |
| 18 | Schneckenspitze |
| 19 | Gehäuse |
| 20 | Trichter |
| 21 | Schnecke |
| 22 | Antrieb |
| 23 | Spritzkopf |
| 24 | Ebene |
| 25 | Endzone |
| 26 | Schnecke |
| 27 | Welle |
| A | Einzugsbereich |
| D | Plastifizierbereich |
| C | Entgasungsbereich |
| D | Förderbereich |

**Patentansprüche**

1. Vorrichtung zum Extrudieren von Kautschukmischungen und Kautschuk ähnlichen Massen, bestehend aus einem Schneckenextruder und einem das Extrudat strangförmig ausformenden Spritzkopf, dadurch gekennzeichnet, daß zwischen dem Extruder (1,4) und dem Spritzkopf (8) eine Zahnradpumpe (6,12) angeordnet ist, und daß die Schneckenspitze (10) bis zu einer parallel zu den Achsen (14) der Zahnräder (12) gleichen Durchmessers oder tangential zum Zahnrad (12) größeren Durchmessers verlaufenden Ebene (13) oder über diese hinaus in den Spalt zwischen den beiden Zahnrädern (12) der Zahnradpumpe (6,12) hineinreicht.

2. Vorrichtung nach Anspruch 1, dadurch gekennzeichnet, daß das Gehäuse (6) der Zahnradpumpe (6,12) eingangsseitig den Zylinder (1) oder die Zylinderbuchse (2) des Extruders umschließt.

3. Vorrichtung nach Anspruch 1, dadurch gekennzeichnet, daß die Schnecke (3) des Extruders mit ihrer Spitze (10) und vorzugsweise auch ihrem Endbereich aus dem Schneckenzylinder (1) herausragt.

4. Vorrichtung nach Anspruch 1, dadurch gekennzeichnet, daß eine vorzugsweise winklige oder gewölbte Strainersiebanordnung (15) im Spalt zwischen der Schneckenspitze (10) und dem Schlagkreis (11) der Zahnräder (12) angeordnet ist.

5. Vorrichtung nach Anspruch 1, dadurch gekennzeichnet, daß die Schnecke (3) keine Druckzone oder nur eine sehr kurze, lediglich einen Teil des Extrusionsdruckes aufbauende Zone aufweist.

6. Vorrichtung nach Anspruch 1, gekennzeichnet durch einen hochgenauen, vorzugsweise digitalgesteuerten Antrieb der Zahnradpumpe.

**7.** Vorrichtung nach Anspruch 1,
gekennzeichnet durch
eine Druck/Drehzahlregelung für die Schnecke des Extruders, bei der der Druckgeber (16) vorzugsweise auf der Einlaufseite der Zahnradpumpe, insbesondere unmittelbar vor den Zahnrädern (12) angeordnet ist.

**8.** Vorrichtung nach Anspruch 1,
dadurch gekennzeichnet,
daß eine Schnecke mit förderweicher Charakteristik im Extruder und eine Zahnradpumpe mit fördersteifer Kennlinie kombiniert sind.

**9.** Vorrichtung nach Anspruch 1 mit einem Vakuumextruder,
dadurch gekennzeichnet,
daß die Schnecke (3) hinter der Vakuumzone nur wenige Windungen, die für den Aufbau des Zulaufdruckes ausreichen, aufweist.

**10.** Vorrichtung zum Extrudieren von Kautschukmassen, bestehend aus einem mit einer Schnecke ausgestatteten Extruder und einem das Extrudat strangförmig ausformenden Spritzkopf,
dadurch gekennzeichnet,
daß die Länge der Extruderschnecke (3) lediglich für eine ausreichende Plastifizierung der zu extrudierenden Kautschukmassen bemessen ist,
und daß an diesen Einschneckenextruder (1-4) ein Zweischneckenextruder (21, 22), dessen Schnecken (21) gegenläufig drehbar sind und mit ihren Schneckengängen ineinandergreifen, für den Aufbau des Extrusionsdruckes angeschlossen ist.

**11.** Vorrichtung nach Anspruch 10,
dadurch gekennzeichnet,
daß hinter der Plastifizierzone (B) des Einschneckenextruders (1-4) eine Entgasungszone (C) angeordnet ist.

**12.** Vorrichtung nach Anspruch 11,
dadurch gekennzeichnet,
daß die Schnecke (3) des Einschneckenextruders (1-4) nach der Entgasungszone (C) nur wenige Schneckengänge aufweist, die für eine kontinuierliche Förderung des Extrudates aus der Entgasungszone (C) in den Doppelschneckenextruder (21, 22) ausreichen.

**13.** Vorrichtung nach Anspruch 10,
dadurch gekennzeichnet,
daß die Schnecke (3) des Einschneckenextruders (1-4) bis unmittelbar vor den Einzugsbereich des Zweischneckenextruders (21, 22) geführt ist.

**14.** Vorrichtung nach Anspruch 10,
dadurch gekennzeichnet,
daß die Achse der Schnecke (3) des Einschneckenextruders (1-4) senkrecht zu derjenigen Ebene (24) angeordnet ist, die durch die Achsen der Schnecken (21) des Zweischneckenextruders (21, 22) verläuft, und daß die Verlängerung der Achse der Schnecke (3) des Einschneckenextruders (1-4) durch den Eingriffsbereich der Schneckengänge des Zweischneckenextruders (21,22) verläuft.

FIG.1

FIG.2

EP 0 508 080 A2

FIG. 3

FIG.4

FIG.5